# FASCICULE DE BREVET EUROPEEN

(11) **EP 4 005 072 B1**
(45) Date de publication et mention de la délivrance du brevet: **29.01.2025**
(21) Numéro de dépôt: 20733458.2
(22) Date de dépôt: 23.06.2020
(51) Int. Cl.: H02K 9/16, H02K 9/193, H02K 15/00

(54) **MACHINE ÉLECTRIQUE ET PROCÉDÉ DE FABRICATION**
ELEKTRISCHE MASCHINE UND HERSTELLUNGSVERFAHREN
ELECTRIC MACHINE AND MANUFACTURING METHOD

(30) Priorité: 22.07.2019 FR 1908281
(43) Date de publication de la demande: 01.06.2022
(73) Titulaire: L'Air Liquide, société anonyme pour l'Étude et l'Exploitation des procédés Georges Claude, 75007 Paris (FR)
(72) Inventeur: DURAND, Fabien, 38360 Sassenage (FR); BRUNET MANQUAT, Loîc, 38360 Sassenage (FR); DELAUTRE, Guillaume, 38360 Sassenage (FR)
(74) Mandataire: Air Liquide
(86) Numéro de dépôt international: PCT/EP2020/067414
(87) Numéro de publication internationale: WO 2021/013451

(56) Documents cités:
- EP-A1- 1 209 801
- EP-A1- 1 209 801
- WO-A1-2016/177933
- WO-A1-2016/177933
- DE-U- 1 813 190
- DE-U- 1 813 190
- US-A- 5 939 808
- US-A- 5 939 808

## Description

L'invention concerne une machine électrique et son procédé de fabrication.

L'invention concerne plus particulièrement une machine électrique, notamment moteur électrique d'entraînement d'au moins un compresseur ou circulateur, comprenant un stator et un rotor disposés dans un carter, la machine comprenant un dispositif de refroidissement disposé autour du stator et comprenant un circuit de circulation d'un fluide de refroidissement.

Il est connu de prévoir un dispositif de refroidissement des moteurs électriques (et en particulier du stator des moteurs), cf. par exemple EP2680408A1.

Des dispositifs de refroidissement connus prévoient un circuit de circulation d'un fluide de refroidissement logé dans un carter étanche ou hermétique vis-à-vis du milieu externe. L'étanchéité de ce circuit vis-à-vis du reste du volume intérieur du carter de la machine est réalisée par des soudures et/ou joints.

En cas de défaillance de l'étanchéité, des fuites de fluide de refroidissement dans le reste de la machine peuvent avoir des conséquences importantes. En particulier, lorsque la machine est un moteur d'entraînement d'un compresseur logé dans le carter étanche de la machine, le fluide de refroidissement qui fuit peut venir se mélanger au gaz de cycle comprimé. Cette pollution peut endommager l'installation utilisant ce gaz de cycle.

Les réparations des points de fuite nécessitent des démontages et opérations longues et coûteuses.

Le document US5939808A décrit une machine conforme au préambule de la revendication 1.

Le document WO2016177933A1 décrit une autre structure de machine électrique.

Un but de la présente invention est de pallier tout ou partie des inconvénients de l'art antérieur relevés ci-dessus.

A cette fin, la machine selon l'invention, par ailleurs conforme à la définition générique qu'en donne le préambule ci-dessus, est définie par la revendication 1.

Par ailleurs, des modes de réalisation de l'invention peuvent comporter l'une ou plusieurs des caractéristiques suivantes :
- la masse de matériau à conductivité thermique élevée est composée d'aluminium ou d'un alliage d'aluminium,
- la conduite de circulation du fluide de refroidissement est constituée d'un matériau métallique ou d'un alliage métallique notamment d'un alliage d'acier inoxydable,
- la masse de matériau à conductivité thermique élevée a une forme cylindrique, le stator étant logé dans et en contact avec la surface interne cylindrique de ladite masse,
- le stator est logé dans la masse de matériau à conductivité thermique élevée par frettage,
- la conduite de circulation comprend des extrémités de préférence cintrées reliées respectivement à l'entrée et à la sortie, en position ouverte le couvercle donnant accès également aux extrémités de la conduite de circulation reliées à l'entrée et à la sortie pour permettre le démontage des extrémités reliée au carter et le retrait ou l'introduction, dans le carter, de l'ensemble stator, rotor, dispositif de refroidissement et desdites extrémités de la conduite de circulation,
- le carter est clos de façon hermétique,
- la portion de la conduite de circulation qui est noyée dans la masse de matériau à conductivité thermique élevée forme l'un au moins parmi : des zigzags, hélices, aller-retour, segments rectilignes, segments cintrés.

L'invention concerne également un procédé de fabrication d'une machine électrique, notamment moteur, conforme à l'une quelconque des caractéristiques ci-dessus ou ci-dessous, la machine comprenant un stator et un rotor disposés dans un carter et un dispositif de refroidissement comprenant une conduite de circulation du fluide de refroidissement comprenant une portion noyée dans une masse de matériau à conductivité thermique élevée tel que du métal ou un alliage métallique, dans lequel le dispositif de refroidissement est préassemblé au stator avant son introduction dans le carter.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue en coupe, schématique et partielle, illustrant un exemple de réalisation de l'invention,
[Fig. 2] représente une vue en perspective, schématique et partielle, illustrant un exemple d'agencement de la conduite de circulation.

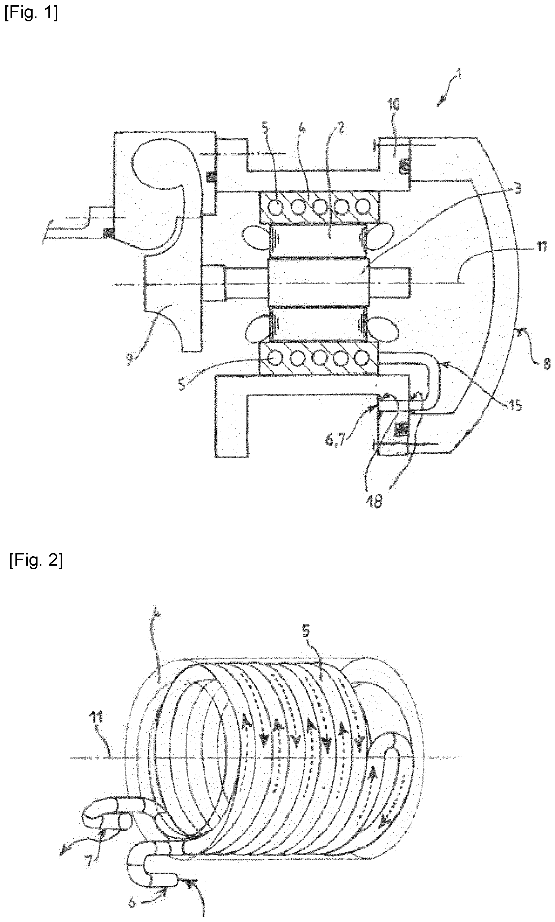

La machine 1 électrique (notamment un moteur électrique) illustrée à la figure 1 comprend un stator 2 et un rotor 3 disposés dans un carter 10.

Le carter 10 délimite un volume de préférence hermétique et étanche abritant le stator 2, le rotor 3 et le dispositif de refroidissement.

Le stator 2 est disposé autour du rotor 3, autour d'un axe longitudinal 11.

Le rotor 3 entraîne par exemple un arbre de rotation sur lequel est monté un compresseur 9 ou circulateur. C'est-à-dire que la machine 1 peut être un moto-compresseur notamment. Bien entendu la machine peut être également un moto-turbocompresseur ayant une turbine montée sur l'autre extrémité de l'arbre et/ou un moteur entraînant plusieurs compresseurs par exemple un moto-compresseur bi-étagé (ayant une roue de compresseur de chaque côté de l'arbre rotatif).

Au moins une partie du carter 10 peut avoir une forme axisymétrique (symétrique autour de l'axe 11) et par exemple cylindrique ou tubulaire et disposé autour du stator 2 (autour de l'axe 11 longitudinal). Le carter 10 peut être composé de pièce(s) métallique(s) assemblées de façon étanche au moyen de joints et axes de fixation notamment.

La machine 1 comprend un dispositif de refroidissement disposé autour du stator 2. Ce dispositif comprenant classiquement un circuit de fluide de refroidissement, notamment un liquide caloporteur. Un tel fluide caloporteur est généralement un liquide qui est prévu pour échanger thermiquement directement ou indirectement avec une partie de la machine et notamment la stator 2. A cet effet, le fluide de refroidissement peut être de l'eau ou tout autre liquide ou gaz ou mélange diphasique capable de transporter de la chaleur

Selon une caractéristique avantageuse, ce dispositif de refroidissement comprend une conduite 5 de circulation du fluide de refroidissement comprenant une portion noyée dans une masse 4 de matériau à conductivité thermique élevée tel que du métal ou un alliage métallique.

Cette portion de la conduite 5 de circulation noyée dans la masse 4 de matériau à conductivité thermique élevée peut notamment être hélicoïdale et/ou décrire des zigzags. C'est-à-dire que la conduite forme des passages multiples (en boucle, zigzag ou autre) autour et/ou le long du stator 2.

Par exemple, la conduite 5 est cintrée (de préférence sans soudure).

Comme illustré à la [Fig. 2], cette conduite 5 réalise par exemple un aller-retour hélicoïdal selon la direction de l'axe 11 longitudinal. Ceci permet d'obtenir une température homogène du stator 2. Les entrée 6 et sortie 7 du fluide sont situées d'un même côté longitudinal du stator 2. Par exemple, la conduite 5 est formée de deux groupes d'hélices qui progressent respectivement selon la direction 11 longitudinale dans deux directions opposées (respectivement aller et retour). Ces deux groupes d'hélices peuvent être imbriquées ou alternées. C'est-à-dire que, entre deux hélices ou spires qui font transiter le fluide selon un premier sens longitudinal, est située une hélice ou spire qui fait circuler le fluide dans le sens longitudinal opposé.

Bien entendu ce mode de réalisation n'est nullement limitatif. Par exemple, alternativement ou en combinaison, la conduite 5 peut être cintrée longitudinalement. C'est-à-dire que la conduite 5 peut comporter des portions (notamment rectilignes) de sens opposées qui s'étendent selon une direction parallèle à l'axe 11 longitudinal. C'est-à-dire que la conduite 5 forme des aller-retours rectilignes selon des directions parallèles à la direction 11 longitudinale. Ces portions longitudinales peuvent correspondre à des génératrices d'un cylindre dont l'axe central est l'axe 11 longitudinal. La conduite est alors cintrée à la jonction entre deux portions longitudinales adjacentes. D'autres orientations peuvent être prévues.

De même, tout autre géométrie de la conduite 5 peut être envisagée tout autour ou seulement autour d'une partie du stator. De plus, pour disposer les entrée 6 et sortie 7 d'un même côté de la machine une portion de retour de la conduite 5 peut être réalisée directement au travers de la masse 4 de matériau à conductivité thermique élevée via un tube, notamment un tube rectiligne.

Ainsi l'ensemble comprenant la masse 4 de matériau à conductivité thermique élevée et la conduite forme un bloc tubulaire qui s'étend selon une direction longitudinale et dont les deux extrémités 6, 7 sont situées à une même extrémité longitudinale de la masse 4.

Ceci forme un ensemble 4, 5 qui peut être enfilé dans un carter 10 (par exemple avec le stator 2 et rotor 3 déjà montés dans la partie centrale de cet ensemple 4, 5).

Ceci facilite les connexions avec les tuyauteries venant se raccorder à la machine 1.

Par conductivité thermique élevée on désigne une conductivité thermique comparable à celle du métal ou d'un alliage métallique. Par exemple, la masse 4 de matériau à conductivité thermique élevée est composée d'aluminium ou d'un alliage d'aluminium.

Cette masse 4 de matériau à conductivité thermique élevée est surmoulée autour de la conduite 5 de circulation de fluide.

La conduite 5 de circulation du fluide de refroidissement peut être constituée d'un matériau métallique ou d'un alliage métallique notamment d'un alliage d'acier inoxydable.

Comme illustré, la masse 4 de matériau à conductivité thermique élevée a par exemple une forme tubulaire et/ou cylindrique et le stator 2, par exemple cylindrique, est logée dans et en contact avec la surface interne de ladite masse 4. C'est-à-dire que la masse 4 peut avoir une forme cylindrique qui est traversée par le tube formé par la conduite 5 de circulation, c'est-à-dire que le volume de la masse de métal ne comble pas tout le cylindre.

Par exemple, la surface extérieure du stator 2 est cylindrique et est enfilée dans un tube cylindrique formé par la masse 4 de matériau à conductivité thermique élevée selon une direction longitudinale qui est parallèle à l'axe de rotation du rotor 3. Par exemple, le stator 2 peut être monté dans la masse 4 de matériau à conductivité thermique élevée par frettage. Ceci confère une bonne conduction thermique entre ces deux éléments en vue d'un refroidissement efficace du stator 2. Si besoin, un élément intermédiaire peut être interposé en vue de diminuer la résistance de contact (colle ou graisse thermique par exemple). Cette masse 4 de matériau à conductivité thermique élevée peut avoir un volume égal ou supérieur (par exemple 1,5 à 3 fois supérieure) au volume de la portion de conduite qu'elle abrite.

Cette masse 4 peut ainsi avoir une inertie thermique favorisant un refroidissement efficace.

Le dispositif de refroidissement et le stator 2 peuvent être préassemblé puis le rotor peut être monté dans le stator et l'ensemble peut être monté dans le carter 10 de la machine 1.

Le carter 10 comprend un couvercle 8 d'accès donnant accès, en position ouverte, au stator 2, au rotor 3 et au dispositif de refroidissement. De préférence, cet accès est orienté selon une direction 11 longitudinale parallèle à l'axe de rotation du rotor 3 et à la direction de montage de l'ensemble stator 2, rotor 3 et du dispositif de refroidissement dans le carter 10.

Comme illustré, la conduite 5 de circulation est reliées à des entrée 6 et sortie 7 débouchant sur une paroi du carter 10. Les entrées 6 et sortie 7 débouchent sur une paroi du carter 10 adjacente au couvercle (c'est-à-dire que les entrées 6 et sorties 7 ne débouchent pas dans le couvercle, ce qui facilite le montage et démontage).

C'est-à-dire que des extrémités d'amenée du fluide de refroidissement (avant circulation dans la masse 4) et de retour du fluide de refroidissement (après circulation dans la masse 4) de la conduite 5 de circulation peuvent être accordées à des entrées et sorties au niveau du carter 10 (par exemple par soudage).

Comme illustré la conduite 5 de circulation peut comprendre des extrémités 15 cintrées reliées respectivement à l'entrée 6 et à la sortie 7 de fluide de refroidissement.

Comme déjà évoqué ci-dessus, ces entrée 6 et sortie 7 peuvent être situées d'un même coté longitudinal du stator ou à l'opposé l'une de l'autre.

De plus, de préférence, lorsque le couvercle 8 est en position ouverte il donne accès également à ces extrémités 15 cintrées de la conduite 5 de circulation reliées à l'entrée 6 et à la sortie 7. Cet agencement permet le démontage des extrémités 15 cintrées reliées au carter 10 et le retrait de l'ensemble hors du carter 10. Inversement, cet agencement permet, lors du montage, l'introduction dans le carter de l'ensemble stator 2, rotor 3 avec le dispositif de refroidissement et les extrémités 15 cintrées de la conduite 5 de circulation.

L'agencement ci-dessus limite les risques de fuite du fluide de refroidissement vers l'intérieur du carter 10 de la machine 1. En particulier, la structure proposée supprime ou limite le nombre de soudures à risque. Par exemple, le cas échant seule une ou quelques soudures peuvent être prévues entre les extrémités de la conduite 5 de circulation et le carter 10, à un emplacement facilement accessible en vue d'une maintenance.

Comme indiqué précédemment, de préférence le carter 10 est clos de façon hermétique et les différents circuits de fluide qui sont reliés à l'extérieur du carter traversent donc de façon étanche ce carter pour garantir l'étanchéité des différents circuits. Ainsi, les entrée 6 et sortie 7 de la conduite traversent le carter 10 de manière étanche.

## Revendications

1. Machine électrique, notamment moteur électrique d'entraînement d'au moins un compresseur ou circulateur, comprenant un stator (2) et un rotor (3) disposés dans un carter (10), la machine (1) comprenant un dispositif de refroidissement disposé autour du stator (2) et comprenant un circuit de circulation d'un fluide de refroidissement, le dispositif de refroidissement comprenant une conduite (5) de circulation du fluide de refroidissement comprenant une portion noyée dans une masse (4) de matériau à conductivité thermique élevée comparable à celle du métal ou un alliage métallique, la masse (4) de matériau à conductivité thermique élevée étant surmoulée autour de la conduite (5) de circulation de fluide, **caractérisé en ce que** le carter (10) délimite un volume de préférence hermétique abritant le stator (2), le rotor (3) et le dispositif de refroidissement et **en ce que** la conduite (5) de circulation est reliée à des entrée (6) et sortie (7) débouchant sur une paroi du carter (10) et **en ce que** les entrée (6) et sortie (7) de la conduite (5) de circulation débouchent à une même extrémité longitudinale de la masse (4) de matériau à conductivité thermique élevée, la direction longitudinale de la masse (4) de matériau à conductivite thermique elevee étant parallèle à l'axe de rotation du rotor en position montée, et **en ce que** le carter (10) comprend un couvercle (8) d'accès donnant accès, en position ouverte, au stator (2), au rotor (3) et au dispositif de refroidissement selon une direction (11) longitudinale parallèle à l'axe de rotation du rotor (3) et à la direction de montage de l'ensemble stator (2), rotor (3) et dispositif de refroidissement dans le carter (10) et **en ce que** les entrée (6) et sortie (7) de la conduite (5) débouchent sur une paroi du carter (10) qui est distincte du couvercle (8) d'accès.

2. Machine selon la revendication 1, **caractérisé en ce que** la masse (4) de matériau à conductivité thermique élevée est composée d'aluminium ou d'un alliage d'aluminium.

3. Machine selon l'une quelconque des revendications 1 à 2, **caractérisé en ce que** la conduite (5) de circulation du fluide de refroidissement est constituée d'un matériau métallique ou d'un alliage métallique notamment d'un alliage d'acier inoxydable.

4. Machine selon l'une quelconque des revendications 1 à 3, **caractérisé en ce que** la masse (4) de matériau à conductivité thermique élevée a une forme cylindrique et **en ce que** le stator (2) est logé dans et en contact avec la surface interne cylindrique de ladite masse (4).

5. Machine selon l'une quelconque des revendications 1 à 4, **caractérisé en ce que** le stator (2) est logé dans la masse (4) de matériau à conductivité thermique élevée par frettage.

6. Machine selon l'une quelconque des revendications 1 à 5, **caractérisé en ce que** la conduite (5) de circulation comprend des extrémités de préférence cintrées reliées respectivement à l'entrée (6) et à la sortie (7), en position ouverte le couvercle (8) donnant accès également aux extrémités de la conduite (5) de circulation reliées à l'entrée (6) et à la sortie (7) pour permettre le démontage des extrémités reliée au carter (10) et le retrait ou l'introduction, dans le carter (10), de l'ensemble stator (2), rotor (3), dispositif de refroidissement et desdites extrémités de la conduite (5) de circulation.

7. Machine selon l'une quelconque des revendications 1 à 6 **caractérisée en ce que** le carter (10) est clos de façon hermétique.

8. Machine selon l'une quelconque des revendications 1 à 7 **caractérisée en ce que** la portion de la conduite (5) de circulation qui est noyée dans la masse (4) de matériau à conductivité thermique élevée forme l'un au moins parmi : des zigzags, hélices, aller-retour, segments rectilignes, segments cintrés.

9. Procédé de fabrication d'une machine électrique, notamment moteur, conforme à l'une quelconque des revendications 1 à 8, la machine comprenant un stator (2) et un rotor (3) disposés dans un carter (10) et un dispositif de refroidissement comprenant une conduite (5) de circulation du fluide de refroidissement comprenant une portion noyée dans une masse (4) de matériau à conductivité thermique élevée tel que du métal ou un alliage métallique, dans lequel le dispositif de refroidissement est préassemblé au stator (2) avant son introduction dans le carter (10).

## Patentansprüche

1. Elektrische Maschine, insbesondere elektrischer Antriebsmotor mindestens eines Kompressors oder einer Umwälzpumpe, welcher einen Stator (2) und einen Rotor (3) umfasst, die in einem Gehäuse (10) angeordnet sind, wobei die Maschine (1) eine Kühlvorrichtung umfasst, die um den Stator (2) herum angeordnet ist und einen Umwälzkreislauf eines Kühlfluids umfasst, wobei die Kühlvorrichtung eine Zirkulationsleitung (5) des Kühlfluids umfasst, die einen Abschnitt umfasst, der in eine Masse (4) aus Material mit hoher Wärmeleitfähigkeit, die mit derjenigen des Metalls oder einer Metalllegierung vergleichbar ist, eingebettet ist, wobei die Masse (4) aus Material mit hoher Wärmeleitfähigkeit um die Fluidzirkulationsleitung (5) gespritzt ist, **dadurch gekennzeichnet, dass** das Gehäuse (10) ein vorzugsweise hermetisch abgeschlossenes Volumen begrenzt, in dem der Stator (2), der Rotor (3) und die Kühlvorrichtung angeordnet sind, und dadurch, dass die Zirkulationsleitung (5) mit einem Einlass (6) und einem Auslass (7) verbunden ist, die an einer Wand des Gehäuses (10) münden, und dadurch, dass der Einlass (6) und der Auslass (7) der Zirkulationsleitung (5) an demselben Längsende der Masse (4) aus Material mit hoher Wärmeleitfähigkeit münden, wobei die Längsrichtung der Masse (4) aus Material mit hoher Wärmeleitfähigkeit parallel zur Drehachse des Rotors in eingebauter Position ist, und dadurch, dass das Gehäuse (10) eine Zugangsabdeckung (8) umfasst, die in geöffneter Position den Zugang zum Stator (2), zum Rotor (3) und zur Kühlvorrichtung in einer Längsrichtung (11) ermöglicht, die parallel zur Drehachse des Rotors (3) und zur Einbaurichtung der aus Stator (2), Rotor (3) und Kühlvorrichtung bestehenden Anordnung in das Gehäuse (10) ist, und dadurch, dass der Einlass (6) und der Auslass (7) der Leitung (5) an einer Wand des Gehäuses (10) münden, die von der Zugangsabdeckung (8) verschieden ist.

2. Maschine nach Anspruch 1, **dadurch gekennzeichnet, dass** die Masse (4) aus Material mit hoher Wärmeleitfähigkeit aus Aluminium oder aus einer Aluminiumlegierung besteht.

3. Maschine nach einem der Ansprüche 1 bis 2, **dadurch gekennzeichnet, dass** die Zirkulationsleitung (5) des Kühlfluids aus einem metallischen Material oder aus einer Metalllegierung besteht, insbesondere aus einer Edelstahllegierung.

4. Maschine nach einem der Ansprüche 1 bis 3, **dadurch gekennzeichnet, dass** die Masse (4) aus Material mit hoher Wärmeleitfähigkeit eine zylindrische Form aufweist, und dadurch, dass der Stator (2) in der Masse (4) und in Kontakt mit ihrer zylindrischen Innenfläche aufgenommen ist.

5. Maschine nach einem der Ansprüche 1 bis 4, **dadurch gekennzeichnet, dass** der Stator (2) in der Masse (4) aus Material mit hoher Wärmeleitfähigkeit durch Aufschrumpfen aufgenommen ist.

6. Maschine nach einem der Ansprüche 1 bis 5, **dadurch gekennzeichnet, dass** die Zirkulationsleitung (5) mit dem Einlass (6) bzw. mit dem Auslass (7) verbundene, vorzugsweise umgebogene Enden umfasst, wobei die Abdeckung (8) in geöffneter Position Zugang auch zu den Enden der Zirkulationsleitung (5) ermöglicht, die mit dem Einlass (6) und mit dem Auslass (7) verbunden sind, um die Demontage der mit dem Gehäuse (10) verbundenen Enden und die Entfernung oder die Einführung, aus dem bzw. in das Gehäuse (11), der aus Stator (2), Rotor (3) und Kühlvorrichtung bestehenden Anordnung und der Enden der Zirkulationsleitung (5) zu ermöglichen.

7. Maschine nach einem der Ansprüche 1 bis 6, **dadurch gekennzeichnet, dass** das Gehäuse (10) hermetisch verschlossen ist.

8. Maschine nach einem der Ansprüche 1 bis 7, **dadurch gekennzeichnet, dass** der Abschnitt der Zirkulationsleitung (5), der in die Masse (4) aus Material mit hoher Wärmeleitfähigkeit eingebettet ist, mindestens eines bildet von: zickzackförmigen Abschnitten, schraubenlinienförmigen Abschnitten, hin- und zurückführenden Abschnitten, geraden Segmenten, umgebogenen Segmenten.

9. Verfahren zur Herstellung einer elektrischen Maschine, insbesondere eines Motors, gemäß einem der Ansprüche 1 bis 8, wobei die Maschine einen Stator (2) und einen Rotor (3) umfasst, die in einem Gehäuse (10) angeordnet sind, und eine Kühlvorrichtung, die eine Zirkulationsleitung (5) des Kühlfluids umfasst, die einen Abschnitt umfasst, der in eine Masse (4) aus Material mit hoher Wärmeleitfähigkeit, wie Metall oder eine Metalllegierung, eingebettet ist, wobei die Kühlvorrichtung vor ihrer Einführung in das Gehäuse (10) am Stator (2) vormontiert wird.

## Claims

1. Electric machine, in particular an electric motor for driving at least one compressor or circulator, comprising a stator (2) and a rotor (3) that are disposed in a casing (10), the machine (1) comprising a cooling device that is disposed around the stator (2) and comprises a circuit for circulation of a cooling fluid, the cooling device comprising a duct (5) for circulation of the cooling fluid that comprises a portion embedded in a mass (4) of material with high thermal conductivity comparable to that of metal or a metal alloy, the mass (4) of material with high thermal conductivity being overmoulded around the fluid circulation duct (5), **characterized in that** the casing (10) delimits a preferably hermetic volume accommodating the stator (2), the rotor (3) and the cooling device and **in that** the circulation duct (5) is connected to an inlet (6) and outlet (7) that open onto a wall of the casing (10) and **in that** the inlet (6) and outlet (7) of the circulation duct (5) open at one and the same longitudinal end of the mass (4) of material with high thermal conductivity, the longitudinal direction of the mass (4) of material with high conductivity being parallel to the axis of rotation of the rotor in the assembled position, and **in that** the casing (10) comprises an access cover (8) providing access, in the open position, to the stator (2), to the rotor (3) and to the cooling device in a longitudinal direction (11) parallel to the axis of rotation of the rotor (3) and to the mounting direction of the assembly of stator (2), rotor (3) and cooling device in the casing (10) and **in that** the inlet (6) and outlet (7) of the duct (5) open onto a wall of the casing (10) that is separate from the access cover (8).

2. Machine according to Claim 1, **characterized in that** the mass (4) of material with high thermal conductivity is composed of aluminium or an aluminium alloy.

3. Machine according to either one of Claims 1 and 2, **characterized in that** the duct (5) for circulation of the cooling fluid is constituted of a metal material or a metal alloy, in particular a stainless steel alloy.

4. Machine according to any one of Claims 1 to 3, **characterized in that** the mass (4) of material with high thermal conductivity has a cylindrical shape and **in that** the stator (2) is housed in and in contact with the cylindrical internal surface of said mass (4).

5. Machine according to any one of Claims 1 to 4, **characterized in that** the stator (2) is housed in the mass (4) of material with high thermal conductivity by way of an interference fit.

6. Machine according to any one of Claims 1 to 5, **characterized in that** the circulation duct (5) comprises preferably bent ends that are connected respectively to the inlet (6) and to the outlet (7), in the open position the cover (8) also providing access to the ends of the circulation duct (5) that are connected to the inlet (6) and to the outlet (7) so as to allow the removal of the ends connected to the casing (10) and the withdrawal or introduction, into the casing (11), of the assembly of stator (2), rotor (3) and cooling device and of said ends of the circulation duct (5).

7. Machine according to any one of Claims 1 to 6, **characterized in that** the casing (10) is hermetically closed.

8. Machine according to any one of Claims 1 to 7, **characterized in that** the portion of the circulation duct (5) that is embedded in the mass (4) of material with high thermal conductivity forms at least one of: zigzags, helices, back-and-forth sections, rectilinear segments, bent segments.

9. Method for manufacturing an electric machine, in particular a motor, in accordance with any one of Claims 1 to 8, the machine comprising a stator (2) and a rotor (3) that are disposed in a casing (10) and a cooling device that comprises a duct (5) for circulation of the cooling fluid that comprises a portion embedded in a mass (4) of material with high thermal conductivity such as metal or a metal alloy, wherein the cooling device is preassembled with the stator (2) before its introduction into the casing (10).
